# EUROPEAN PATENT APPLICATION

(11) **EP 2 014 523 A1**
(43) Date of publication of application: **14.01.2009**
(21) Application number: 08158437.7
(22) Date of filing: 17.06.2008
(51) Int. Cl.: B60R 25/04

(54) **Control system and method, fixed radio communication device and method, and portable radio communication device and method**

(30) Priority: 11.07.2007 JP 2007181715
(71) Applicant: OMRON Corporation, a corporation of Japan, Shiokoji-dori, Shimogyo-ku Kyoto-shi Kyoto 600-8530 (JP)
(72) Inventor: Hayama, Kosuke, Kyoto Kyoto 600-8530 (JP); Ichiyanagi, Hoshibumi, Kyoto Kyoto 600-8530 (JP); Satoh, Yasuhiro, Kyoto Kyoto 600-8530 (JP); Takenouchi, Shinya, Kyoto Kyoto 600-8530 (JP); Kawashima, Hidemitsu, Kyoto Kyoto 600-8530 (JP)
(74) Representative: Brochard, Pascale

(57) **Abstract**

A start of a vehicle is made to be capable of limited in compliance with a necessity. For example, in a case where an operation mode at a time point in which a "request" from an ECU was received is a start inhibition mode, a portable electronic key forms an "answer" including a "start inhibition information", and transmits that "answer" to the ECU by a UHF. Inthiscase, in an ECU side, the start of the vehicle is inhibited. In contrast to this, in a case where it is a start permission mode, an "answer" not including the "start inhibition information" is formed and transmitted to the ECU. In this case, in the ECU side, the start of the vehicle is permitted. That is, by the fact that an accelerator is stepped on and the like, the vehicle starts. The present invention can be applied to a passive entry system.

## Description

### BACKGROUND OF THE INVENTION

### 1. Field of the Invention

The present invention relates to control system and method, fixed radio communication device and method, and portable radio communication device and method, and relates to control system and method, fixed radio communication device and method, and portable radio communication device and method, in each of which there is made such that a function preventing a start of a vehicle can be set.

### 2. Description of Related Art

An existing antitheft system of the vehicle is constituted by an ECU (Electronic Control Unit) mounted to the vehicle, and a portable electronic key that a user driving that vehicle carries (e.g., refer to JP-A-2001-289142 (Patent Document 1)).

In this case, the user presses down, e.g., a predetermined switch in order to start an engine of the vehicle. Whereon, the ECU performs a certified communication with the portable electronic key and, if it succeeds in that certification, implements a processing necessary for starting the engine of the vehicle.

However, from the fact that an opening/closing of a door of the vehicle is possible and the start of the engine is possible, in a case where there is considered such a scene that, e.g., the portable electronic key is handed to a child or the like and it is requested to take out and bring a luggage in the vehicle, there occurs an issue that there is such a fear that the child performs a false operation and the vehicle starts to move. Further, there is also considered the fact the child drops the portable electronic key, and there occurs an issue that there is a fear that the vehicle is robbed by a third person who picked up that portable electronic key.

### SUMMARY OF THE INVENTION

The present invention is one made in view of the situation like this, and one providing a vehicle antitheft system or method, in which it is possible to set the function preventing the start of the vehicle.

The control system in one aspect of the present invention is a control system including a fixed radio communication device mounted to a vehicle and controlling an operation of the vehicle, and a portable radio communication device capable of being carried, wherein the portable radio communication device includes a mode setting means capable of setting a start permission mode permitting a start of the vehicle and a start inhibition mode inhibiting the start of the vehicle, an answer formation means forming an answer capable of specifying an operation mode set by the mode setting means, and an answer transmission means transmitting the answer; and the fixed radio communication device includes a reception means receiving the answer, and a start permission means which deciphers the answer and, in a case where a deciphered result is the start permission mode, permits the start of the vehicle.

The fixed radio communication device is constituted, e.g., by the ECU mounted to the vehicle. The portable radio communication device is constituted, e.g., by the portable electronic key.

By this, in compliance with an operation of the user, it is possible to set the function preventing the start of the vehicle.

The control method in one aspect of the present invention is a method corresponding to the above-mentioned control system in one aspect of the present invention.

The fixed radio communication device in one aspect of the present invention is a fixed radio communication device in a control system including the fixed radio communication device mounted to a vehicle and controlling an operation of the vehicle, and a portable radio communication device capable of being carried, and includes a reception means in which, by the portable radio communication device, there is set one between a start permission mode permitting a start of the vehicle and a start inhibition mode inhibiting the start of the vehicle, and which, in a case where an answer capable of specifying a set operation mode was formed and became transmitted, receives the answer; and a start permission means which deciphers the answer received by the reception means and, in a case where a deciphered result is the start permission mode, permits the start of the vehicle.

The fixed radio communication device is constituted, e.g., by the ECU mounted to the vehicle. The portable radio communication device is constituted, e.g., by the portable electronic key.

The reception means is constituted, e.g., by a reception section for a UHF. The start permission means is constituted, e.g., by a microcomputer and the like.

By this, in compliance with the operation of the user, it is possible to set the function preventing the start of the vehicle.

The fixed radio communication method in one aspect of the present invention is a method corresponding to the above-mentioned fixed radio communication device in one aspect of the present invention.

The portable radio communication device in one aspect of the present invention is a portable radio communication device in a control system including a fixed radio communication device mounted to a vehicle and controlling an operation of the vehicle, and the portable radio communication device capable of being carried, and includes a mode setting means capable of setting a start permission mode permitting a start of the vehicle and a start inhibition mode inhibiting the start of the vehicle, an answer formation means forming an answer capable of specifying an operation mode set by the mode setting means, and an answer transmission means transmitting the answer.

The fixed radio communication device is constituted, e.g., by the ECU mounted to the vehicle. The portable radio communication device is constituted, e.g., by the portable electronic key.

The mode setting means and the answer formation means are constituted so as to include, e.g., a microswitch, a mechanism capable of detecting a state (ON-state/OFF-state) of the former, a microcomputer, and the like. The transmission means is constituted, e.g., by a transmission section for the UHF, and the like.

By this, in compliance with the operation of the user, it is possible to set the function preventing the start of the vehicle.

The portable radio communication method in one aspect of the present invention is a method corresponding to the above-mentioned portable radio communication device in one aspect of the present invention.

Like the above, according to the present invention, in compliance with the operation of the user, it is possible to set the function preventing the start of the vehicle.

By this, it is possible to prevent the start of the vehicle, e.g., by a person to whom it is necessary to inhibit a driving of the vehicle. Detailedly, e.g., when the portable electronic key is handed to the child who is one example of the person to whom it is necessary to inhibit the driving of the vehicle and it is requested to take out and bring the luggage, or it is desired to previously enter to the vehicle, there is no fact that the vehicle moves even if the child falsely operates. Further, e.g., in a case where the child drops the portable electronic key in a midway till entering to the vehicle and the third person picked up that portable electronic key, such a third person is also one example of the person to whom it is necessary to inhibit the driving of the vehicle. Even if the third person like this attempts to rob that vehicle, since there is no fact that the vehicle moves, there is an advantage that a security property is improved.

### BRIEF DESCRIPTION OF THE DRAWINGS

Fig. 1 is a block diagram showing a constitution example of a passive entry system as a control system to which the present invention is applied.
Fig. 2 is a diagram showing a structure example of an "answer".
Fig. 3 is a diagram showing other structure example of the "answer".
Fig. 4 is a view for explaining a mode switchover operation of a portable electronic key of Fig. 1, and is a perspective view showing a constitution example of an external appearance of the portable electronic key.
Fig. 5 is a view for explaining the mode switchover operation of the portable electronic key of Fig. 1, and is a perspective view showing the constitution example of the external appearance of the portable electronic key.
Fig. 6 is a view for explaining the mode switchover operation of the portable electronic key of Fig. 1, and is a view showing a constitution example of an inside of the portable electronic key.
Fig. 7 is a diagram explaining an example of an operation state of a microswitch of Fig. 6.
Fig. 8 is a view for explaining the mode switchover operation of the portable electronic key of Fig. 1, and is a view showing the constitution example of the inside of the portable electronic key.
Fig. 9 is a view for explaining the mode switchover operation of the portable electronic key of Fig. 1, and is a view showing other constitution example of the inside of the portable electronic key.
Fig. 10 is a view for explaining the mode switchover operation of the portable electronic key of Fig. 1, and is a view showing a state in a case where a correct mechanical key is attached to the portable electronic key of Fig. 9.
Fig. 11 is a view for explaining the mode switchover operation of the portable electronic key of Fig. 1, and is a view showing a state in a case where other mechanical key is attached to the portable electronic key of Fig. 9.
Fig. 12 is a diagram for explaining a start permission processing example in an ECU side of Fig. 1.
Fig. 13 is a diagram for explaining the start permission processing example in a portable electronic key side of Fig. 1.
Fig. 14 is a block diagram showing, in a case where one constitution element of the control system to which the present invention is applied was constituted by a computer, a hardware constitution example of that computer.

### DESCRIPTION OF PREFERRED EMBODIMENTS

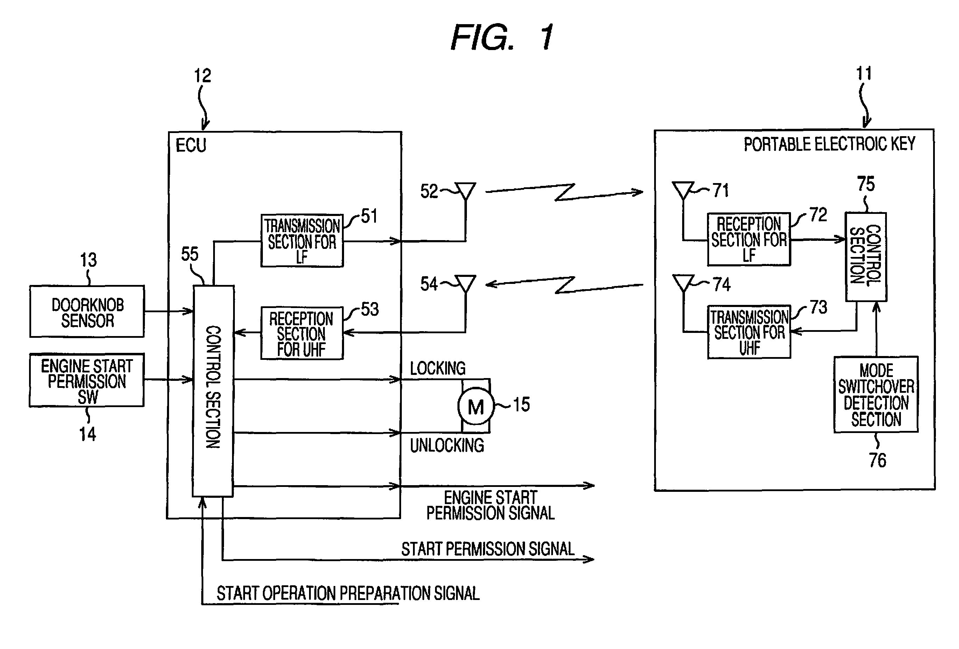

Fig. 1 shows a constitution example of a passive entry system as one embodiment of a control system to which the present invention is applied.

In the example of Fig. 1, the passive entry system is constituted so as to include a portable electronic key 11 to a motor 15.

The portable electronic key 11 is carried mainly by the user driving the vehicle, and used for performing the opening/closing of the door of the vehicle, the start of the engine of the vehicle, and the like.

That is, an ECU (Electronic Control Unit : electronic control unit) 12 mounted to the vehicle performs, by performing a radio communication with the portable electronic key 11, its certification and, in a case where it succeeded in the certification, controls operations of the opening/closing of the door of the vehicle, the start of the engine, and the like.

However, as mentioned above, the situation that the engine of the vehicle can be started causes a problem that, in such an assumption that a child or the like is given the portable electronic key 11 and requested to take out and bring the luggage in the vehicle, the child may perform the false operation and the vehicle may start to move if there is applied no restriction at all like the related art. Further, there is considered also the fact that the child drops the portable electronic key 11, and there is generated an issue that there occurs a fear that the vehicle is robbed.

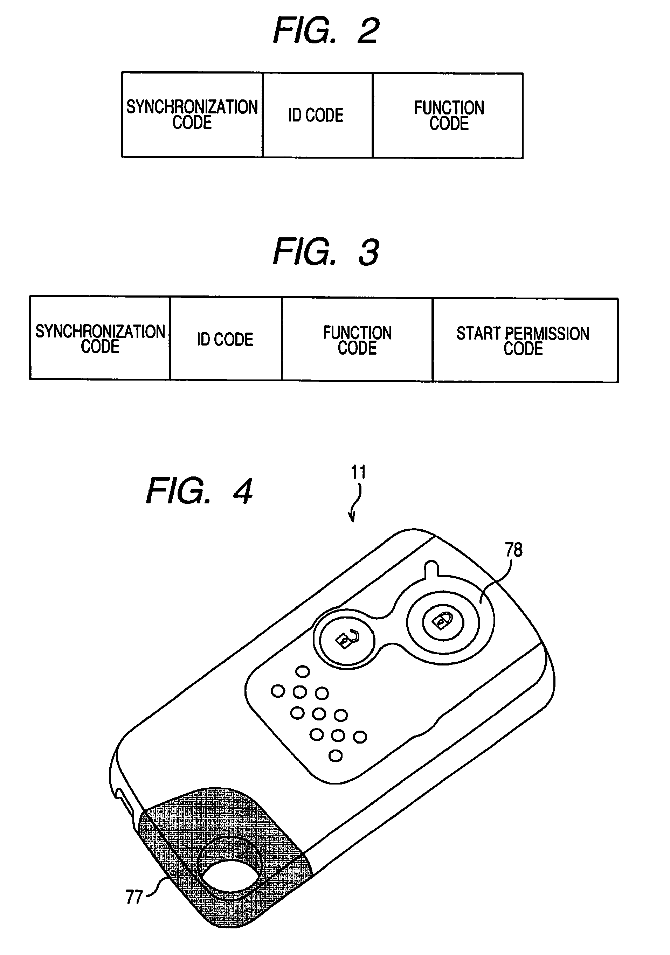

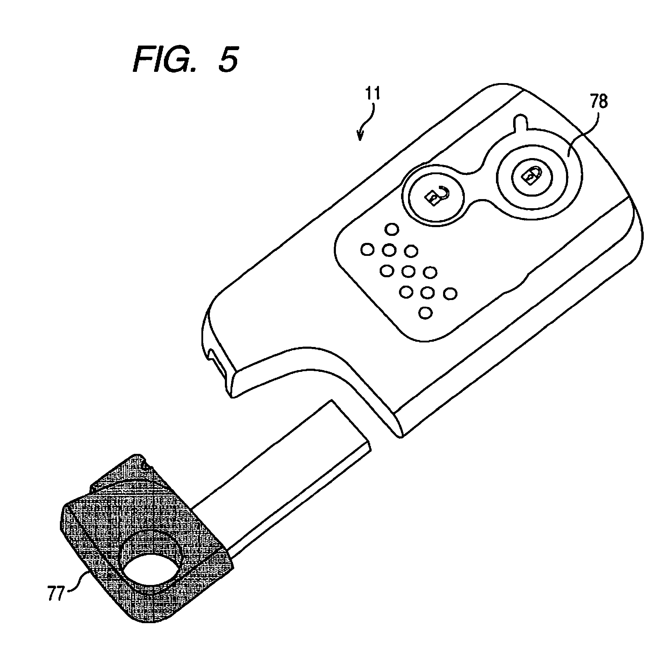

Whereupon, in order to solve these issues, the portable electronic key 11 of the present embodiment has additionally a function restricting the start of the vehicle. Concretely, as operation modes of the portable electronic key 11, it has a start permission mode and a start inhibition mode, and there is made such that a switchover operation between these two modes canbe freelyperformed. Incidentally, about a concrete example of the switchover operation between the two modes, there is mentioned later by referring to Fig. 4 and Fig. 5.

In a case where a user, e.g., a parent who is a justifiable driver of the vehicle, of the portable electronic key 11 having such function hands the portable electronic key 11 to the child who is the person to whom it is necessary to inhibit the driving of the vehicle, it is possible to switch the operation mode of the portable electronic key 11 to the start inhibition mode. In this case, by performing a communication with the portable electronic key 11, the ECU 12 recognizes the fact that it is the start inhibition mode, thereby controlling so as to inhibit the start of the vehicle.

In contrast to this, in a case where the user (parent) himself/herself rides on the vehicle in order to perform the driving of the vehicle, it is possible to switch the operation mode of the portable electronic key 11 to the start permission mode. In this case, by performing the communication with the portable electronic key 11, the ECU 12 recognizes the fact that it is the start permission mode, thereby controlling so as to permit the start of the vehicle.

Incidentally, as a control of the inhibition of the start of the vehicle, which is mentioned here, e.g., there may be controlled such that the start itself of the engine cannot be performed, or there may be made such that there is performed till the start of the engine but a start operation of the vehicle after it cannot be performed. Additionally, as the control of the inhibition of the start of the vehicle, e.g., by locking a shift lever, there may be made so as not to be capable of being moved from a parking position. It may be other means, e.g., means acting on a brake or the like. However, in the present embodiment, it is made that there is adopted a technique in which there is controlled such that there is performed till the start of the engine but the start operation of the vehicle after it cannot be performed.

By this, it becomes possible to bring about an advantage that the above-mentioned issues can be solved, i.e., concretely, an advantage like the below for instance. For example, when the portable electronic key 11 is handed to the child and it is requested to take out and bring the luggage or it is desired to previously enter to the vehicle, since there is no fact that the vehicle moves even if the child falsely operates, it is possible to bring about an advantage that for the parent there is no anxiety. Further, e.g., even if the child previously enters to the vehicle, since a supply of a so-called ACC electric source itself becomes possible, a so-called car audio or car navigation or air control device (so-called air conditioner) becomes usable, so that it is possible to bring about an advantage that for the child it is comfortable. Further, e.g., even if the child drops the portable electronic key 11 in a midway till entering to the vehicle and a third person picks up that portable electronic key 11 and attempts to rob that vehicle, since there is no fact that the vehicle moves, it becomes possible to bring about an advantage that there is no anxiety in a security aspect.

Hereunder, there is explained about a detailed constitution example of the passive entry system including the portable electronic key 11 like this and the ECU 12.

In the example of Fig. 1, the ECU 12 is constituted so as to include a transmission section 51 for an LF, a reception section 53 for a UHF, and a control section 55.

Further, to the control section 55 of the ECU 12, there are connected a doorknob sensor 13 and an engine start permission switch 14 (hereafter, called an engine start permission SW 14 in conformity with a depiction in Fig. 1).

The doorknob sensor 13 is a sensor which, in order to operate a doorknob of the vehicle, detects a user's body (e.g., a hand or a finger) approaching to or contacting with this doorknob or its vicinity. For example, as the doorknob sensor 13, there can be adopted an electrostatic capacity type sensor accommodated in the doorknob, a radar using a radio, and the like. Further, the engine start permission SW 14 is a push button type switch provided, e.g., in an instrument panel near a driver's seat in order to start-operate the engine of the vehicle.

Here, instead of the doorknob sensor 13 or in addition to the doorknob sensor 13, there may be provided other sensor (e.g., a doorknob actuation sensor). The doorknob actuation sensor is some sort of sensor which, if the doorknob is pulled, outputs a detection signal. Further, as the engine start permission SW 14, proximity sensors for detecting an arm or a foot of the driver may be provided in respective places in which there are disposed operation means for performing a driving operation (including a start operation of the engine) in the driver's seat.

Further, to the control section 55 of the ECU 12, there is connected the transmission section 51 for the LF. An antenna 52 is connected to this transmission section 51 for the LF. That is, the transmission section 51 for the LF transmits an information, e.g., a "request" for certifying the portable electronic key 11, or the like, which is provided from the control section 55, from the antenna 52 in the form of the LF (Low Frequency).

Further, to the control section 55 of the ECU 12, there is connected the reception section 53 for the UHF. An antenna 54 is connected to this reception section 53 for the UHF. That is, the reception section 53 for the UHF receives, through the antenna 54, an information, e.g., an "answer" to the above-mentioned "request", which becomes transmitted from the portable electronic key 11 in the form of the UHF (Ultra High Frequency) and, after converting it into a suitable form, provides it to the control section 55.

Incidentally, the term "request" used in the present specification means a radio signal transmitted from a fixed radio communication device (the ECU 12 in the present embodiment), and is a radio signal having a function which, on the basis of the fact that a portable radio communication device (the portable electronic key 11 in the present embodiment) existing in a communication sphere received this "request", causes such that the portable radio communication device transmits a signal.

Further, the term "answer" used in the present specification means a radio signal transmitted from the portable radio communication device on the basis of the fact that the above "request" was received. A function of the "answer" may be a function showing merely the fact that the reception was made, or one demanding or causing to implement some sort of operation to the fixed radio communication device. Generally, in the "answer", there is included an inherent identification number (ID) of each radio communication device. Other than that, in the "answer", there may be included a position information of the portable radio communication device, a code requesting an operation to the vehicle or the fixed radio communication device, and the like. Further, in the present embodiment, as mentioned later, e.g., in the "answer" there is included the operation mode of the portable radio communication device, i.e., an information (a later-mentioned start inhibition information or the like) capable of specifying the start inhibition mode or the start permission mode. Further, the portable radio communication device may be made so as to intermittently transmit the "answer". In this mode, the portable radio communication device is not necessary to receive the "request".

Additionally further, the motor 15 is connected to the control section 55 of the ECU 12. The motor 15 is a motor which is a drive source of a lock device of a vehicle door, i.e., a door lock actuator.

Although not shown in the drawing, the control section 55 is constituted so as to include, e.g., a storage section storing various informations, a microcomputer performing a control of the whole ECU 12 and a necessary information processing, and the like. Here, the storage section not shown in the drawing comprises, e.g., a nonvolatile memory capable of writing and erasing, more concretely an EEPROM (Electrically Erasable Programmable Read-only Memory) for instance.

As mentioned above, this control section 55 implements a control processing for performing the opening/closing of the door of the vehicle, the start of the engine of the vehicle, or the like.

For example, if the detection signal of the doorknob sensor 13 is inputted, the control section 55 transmits the "request" from the antenna 52. And, in a case where the "answer" from the portable electronic key 11 couldbe received, the ID included in the "answer" is collated. And, as a collated result, in a case where there coincided with the ID registered in the control section 55, the control section 55 drives the motor 15, thereby performing an unlocking of the door.

For example, if the detection signal of the engine start permission SW 14 is inputted, the control section 55 transmits the "request" from the antenna 52. And, in a case where the "answer" from the portable electronic key 11 could be received, the ID included in the "answer" is collated. And, as the collated result, in the case where there coincided with the ID registered in the control section 55, the control section 55 outputs an engine start permission signal. If an engine control ECU not shown in the drawing receives this engine start permission signal, the engine is started. By this, the engine of the vehicle starts.

Additionally, if a start operation preparation signal is inputted, the control section 55 transmits the "request" from the antenna 52. In this case, e.g., the portable electronic key 11 transmits the "answer" capable of specifying its own operation mode. In a case where the "answer" could be received and a case where, from that "answer", there was recognized the fact that the operation mode of the portable electronic key 11 was the start permission mode, the control section 55 outputs a start permission signal. By this, a lock of the shift lever not shown in the drawing for instance is released. After it, by the fact that a brake is released and a stepping-on operation of an accelerator, and the like are performed so as to be ordinarily driven, there becomes such that the vehicle can start.

In contrast to this, even in a case where the "answer" could be received, in a case where there was recognized, from that "answer", the fact that the operation mode of the portable electronic key 11 was the start inhibition mode, the control section 55 inhibits the output of the start permission signal. Further, also in a case where the "answer" could not be received, the control section 55 inhibits the output of the start permission signal. By this, e.g., in a case where the vehicle is constituted such that the lock of the shift lever is released if the start permission signal is outputted as mentioned above, there becomes such that the start of the vehicle can be inhibited because the shift lever cannot be moved from the parking position.

Like this, in the present embodiment, by inhibiting the release of the lock of the shift lever, the start of the vehicle is inhibited. However, an inhibition technique of the start of the vehicle is not limited especially to the example of the present embodiment. For example, there may be made such that a clutch cannot be connected, or there may be made such that the brake cannot be released. Or further, there may be made so as to inhibit the start of the vehicle by the facts that the engine start permission signal and the start permission signal are used in combination, and that an engine control ECU not shown in the drawing stops or does not start the engine by inhibiting the output of the engine start permission signal.

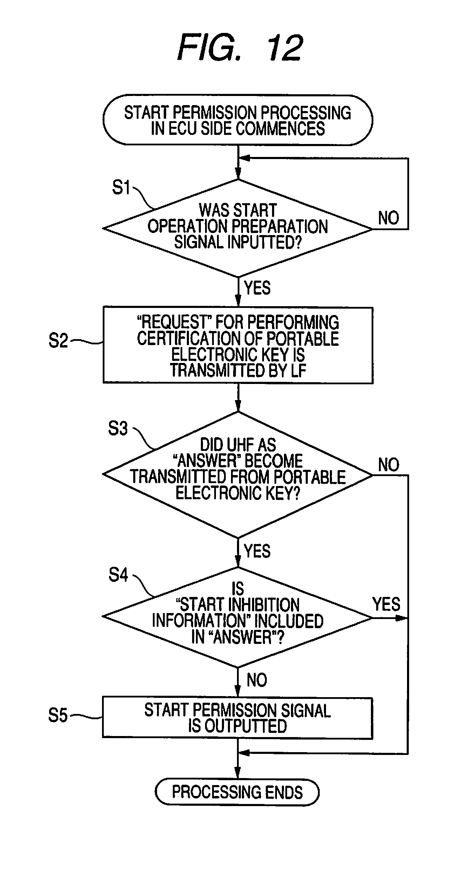

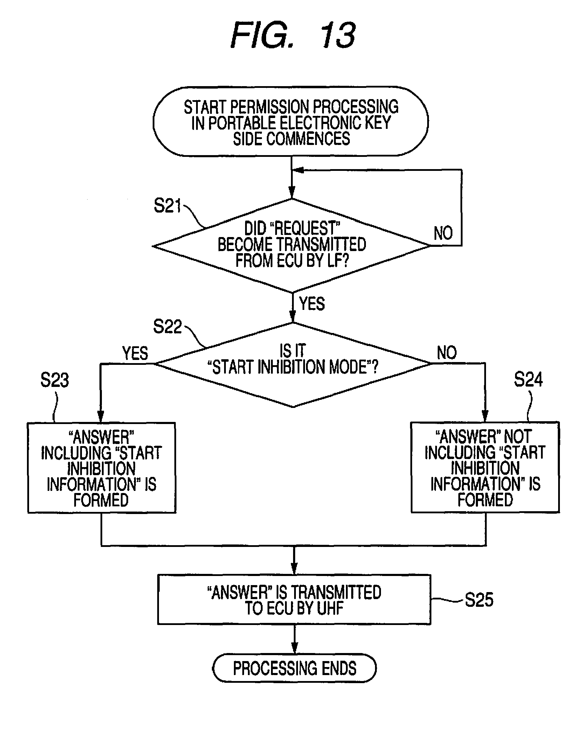

Incidentally, about a detailed example of a processing of the ECU 12 (hereafter, called a start permission processing in an ECU side), which is implemented with the start operation preparation signal like this being made a trigger, there is mentioned later by referring to Fig. 12. Further, about a detailed example of a processing (hereafter, called a start permission processing in a portable electronic key side) in a portable electronic key 11 side in regard to that start permission processing in the ECU side, there is mentioned later by referring to Fig. 13.

Further, the start operation preparation signal itself is not limited especially in its form. For example, a sensor (not shown in the drawing) capable of detecting a shift operation and the stepping-on operation of the accelerator, or the like is provided, and a detection signal from the sensor or the like can be adopted as the start operation preparation signal. For example, if the sensor is accommodated in the shift lever and there is made such that the sensor can detect the fact that the hand contacted with the shift lever, a detection signal of the sensor at a time point in which the hand contacted can be utilized as the start operation preparation signal. Further, e.g., a detection signal when the shift lever was movement-operated from the so-called parking position (position of "P") to other position (position of "R", "D", "1", "2" or the like) can be adopted as the start operation preparation signal. Further, e.g., in a case where there is adopted a detection sensor of the stepping-on operation of the accelerator, a detection signal at the time that the throttle position of the accelerator becames a predetermined throttle position or larger can be adopted as the start operation preparation signal.

Further, e.g., it is also possible to use the detection signal of the engine start permission SW 14 also as the start operation preparation signal.

Additionally, e.g., in the example of Fig. 1, although there is depicted such that the start operation preparation signal is given from an outside of the control section 55, it is also possible to adopt a signal formed in the control section 55 itself. Concretely, e.g., it is also possible to use the engine start permission signal also as the start operation preparation signal.

Further, the number of the start operation preparation signal is not limited especially as well. For example, in a case where each of the respective detection signals of the above-mentioned various sensors or each of the signals formed in the control section 55 itself is respectively adopted as the start operation preparation signal and any among the respective signals is inputted, or in a case where the signal is formed by itself, there may be made such that the start permission processing in the ECP side is implemented. Further, the detection signal or the signal formed by itself is not adopted as the start operation preparation signal with a simplex, but it is also possible to adopt one in which some signals among them are combined, as the start operation preparation signal.

In regard to the ECU 12 like this, the portable electronic key 11 in the example of Fig. 1 is constitutes so as to include an antenna 71 to a mode switchover detection section 76.

A reception section 72 for the LF converts the LF received by the antenna 71 into an information of a suitable form, thereby providing it to a control section 75. Here, as the information received in the form of the LF by the antenna 71, there exist, e.g., the above-mentioned "request" from the ECU 12, and the like.

A transmission section 73 for the UHF transmits the information provided from the control section 75, from an antenna 74 in the form of the UHF. Here, as the information provided from the control section 75, there exist, e.g., the "answer" to the ECU 12, and the like.

Although not shown in the drawing, the control section 75 is constituted so as to include a storage section storing various informations, a microcomputer performing a control of the whole portable electronic key 11 and a necessary information processing, and the like. Here, the storage section not shown in the drawing comprises, e.g., the nonvolatile memory capable of writing and erasing, more concretely the EEPROM for instance.

On the basis of a detection signal from the later-mentioned mode switchover detection section 76, the control section 75 switches the operation mode of the portable electronic key 11 from any one between the start permission mode and the start inhibition mode to the other.

Further, the control section 75 forms the "answer" capable of specifying its own operation mode in regard to the "request" from the ECU 12, thereby providing it to the transmission section 73 for the UHF.

Here, the "answer" capable of specifying the own operation mode suffices if it is a form capable of specifying the operation mode in the ECU 12 side.

For example, it is possible to adopt the "answer" of such a structure as shown in Fig. 2. That is, the "answer" of Fig. 2 is an "answer" of a structure utilized from olden times. In the "answer" of Fig. 2, there are included a synchronization code, an ID code, and a function code.

In the related art, in a case where an operation switch provided in the portable electronic key is pressed down, e.g., a code meaning a door lock function is transmitted as the function code while being included in the "answer". In this case, the fixed radio communication device such as the ECU receives and reads that "answer", and thereafter performs a predetermined control complying with this function code. Further, in the related art, as mentioned above, in the case where the engine is started, merely a collation of the ID code is performed and, if succeeds in that collation, the engine is immediately started.

Whereupon, in a case where there is adopted the "answer" of the structure of Fig. 2 like this, e.g., in the present embodiment, it is made that, at a time of the start inhibition mode, there is formed an "answer" including an information (hereafter, called the start inhibition information), which shows the fact that it is the start inhibition mode, as the function code. Incidentally, hereafter, the "answer" like this is especially called an "answer" including the "start inhibition information".

In contrast to this, e.g., in the present embodiment, it is made that, at a time of the start permission mode, there is formed an "answer" not including the start inhibition information as the function code. Incidentally, hereafter, the "answer" like this is especially called an "answer" not including the "start inhibition information".

That is, in the present embodiment, in a case where the answer not including the "start inhibition information" is received, the ECU 12 can recognize the fact that the operation mode of the portable electronic key 11 is the start permission mode. In contrast to this, in a case where the answer including the "start inhibition information" is received, the ECU 12 can recognize the fact that the operation mode of the portable electronic key 11 is the start inhibition mode.

However, the "answer" adopted in the present embodiment is nothing but an exemplification.

Other than that, e.g., at the time of the start permission mode, there may be formed an "answer" including an information (hereafter, called a "start permission information"), which shows the fact that it is the start permission mode, as the function code.

Further. e.g., there may be made such that, as the ID code, there is adopted a different code for the engine start and other use (e.g., for a door unlock), and the transmission is performed by switching from the portable electronic key 11. In this case, as the ID code, while the code for the engine start becomes the "start permission information", the code of a use other than that or non-code becomes the "start inhibition information".

Further, e.g., there may be adopted an "answer" of a structure shown in Fig. 3, i.e., an "answer" in which there are included additionally a start permission code in addition to the synchronization code, the ID code, and the function code. In this case, it follows that the start inhibition information or the start permission information is included in the "answer" as the start permission code.

Returning to Fig. 1, the mode switchover detection section 76 detects the fact that there was performed a switchover operation (hereafter, called a mode switchover operation) from one between two of the start permission mode and the start inhibition mode to the other, and provides that detection result to the control section 75.

That is, the mode switchover operation itself suffices if it is an operation in which the mode switchover detection section 76 can detect, and is not limited especially.

Concretely, e.g., by making the portable electronic key 11 into a constitution including one capable of being divided like a tally, and constituting such that the mode switchover detection section 76 can judges whether or not the tally and the like are mounted to the portable electronic key 11, the mode switchover operation like the below becomes possible.

That is, by removing the tally and the like from the portable electronic key 11, the parent (the user who is the driver) can switch the operation mode of the portable electronic key 11 to the start inhibition mode. And, the parent previously retains that tally and the like, and hands to the child the portable electronic key 11 from which the tally and the like were removed. Whereupon, the mode switchover detection section 76 detects the fact that the tally and the like were removed from the portable electronic key 11 and, as its detection result, outputs a signal showing the fact that there was switched to the start inhibition mode to the control section 75. Under this state, in a case where there was the "request" from the ECU 12 side, it follows that the control section 75 forms the "answer" including the "start inhibition information".

In contrast to this, by mounting the tally and the like to the portable electronic key 11, the parent can switch the operation mode of the portable electronic key 11 to the start permission mode. That is, in this case, the mode switchover detection section 76 detects the fact that the tally and the like were mounted to the portable electronic key 11 and, as its detection result, outputs a signal showing the fact that there was switched to the start permission mode to the control section 75. Under this state, in the case where there was the "request" from the ECU 12 side, it follows that control section 75 forms the "answer" not including the "start inhibition information".

As the tally and the like, as shown in Fig. 4 and Fig. 5 for instance, it is possible to adopt a mechanical key 77. This mechanical key 77 is originally accommodated in the portable electronic key 11 as a key for an emergency, which is used in a case where a battery of the portable electronic key 11 is exhausted or broke down. That is, Fig. 4 and Fig. 5 show a constitution example of an external appearance of the portable electronic key 11.

Under a state of Fig. 4, the mechanical key 77 as the tally is mounted to the portable electronic key 11. In a case like this, the operation mode of the portable electronic key 11 becomes the start permission mode.

In contrast to this, under a state of Fig. 5, the mechanical key 77 as the tally is removed from the portable electronic key 11. In a case like this, the operation mode of the portable electronic key 11 becomes the start inhibition mode.

Here, as means detecting whether the mechanical key 77 is the state mounted to the portable electronic key 11 or the state removed from the same, it is possible to adopt, e.g., a contact type sensor such as microswitch, a non-contact type sensor such as magnetic sensor or optical sensor, and the like.

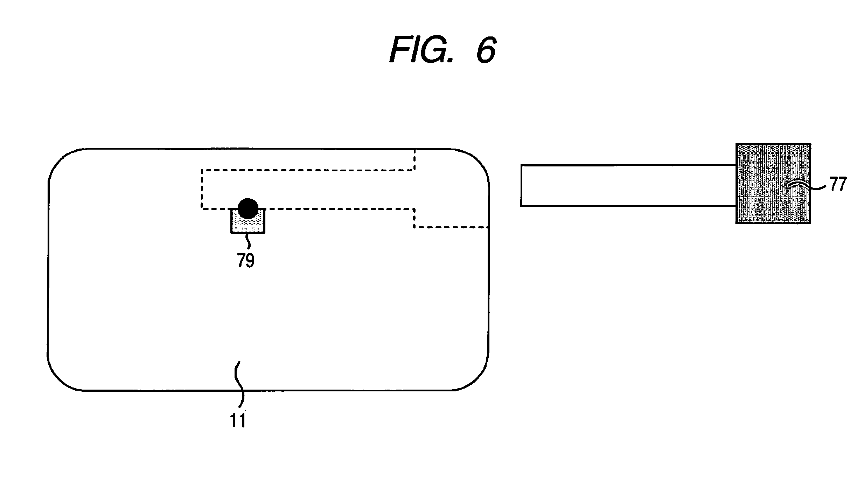

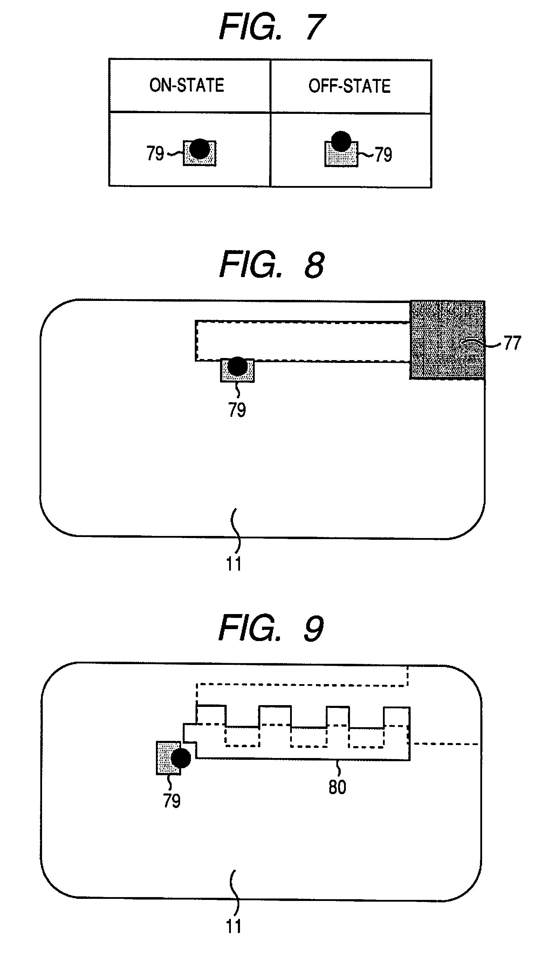

As shown in Fig. 6, in the present embodiment, a microswitch 79 is made to be provided in the portable electronic key 11. As shown in Fig. 7, a state of this microswitch 79 becomes an ON-state in a case where a contact point (in the drawing, a portion of a black circular mark) is pushed into an inside, and becomes an OFF-state in a case where the contact point is protruded to an outside.

That is, as shown in Fig. 6, in a case (a case corresponding to Fig. 5) where the mechanical key 77 as the tally is removed from the portable electronic key 11, the microswitch 79 becomes the OFF-state. By the fact that the mode switchover detection section 76 in Fig. 1 detects this contact point state, the operation mode of the portable electronic key 11 is set to the start inhibition mode.

In contrast to this, as shown in Fig. 8, in a case (a case corresponding to Fig. 4) where the mechanical key 77 as the tally is mounted to the portable electronic key 11, since the mechanical key 77 contacts with the microswitch 79, its contact point is pushed in and, as a result, it becomes the ON-sate. By the fact that the mode switchover detection section 76 in Fig. 1 detects this contact point state, the operation mode of the portable electronic key 11 is set to the start permission mode.

Additionally, as shown in Fig. 9, as an injustice prevention countermeasure, it is suitable if there is made a constitution in which a mechanism 80 (including a key cylinder and the like as well) recognizing the correct mechanical key 77 is provided in the portable electronic key 11 and, even if other mechanical key or a rod is inserted into the portable electronic key 11, a start permission is not given.

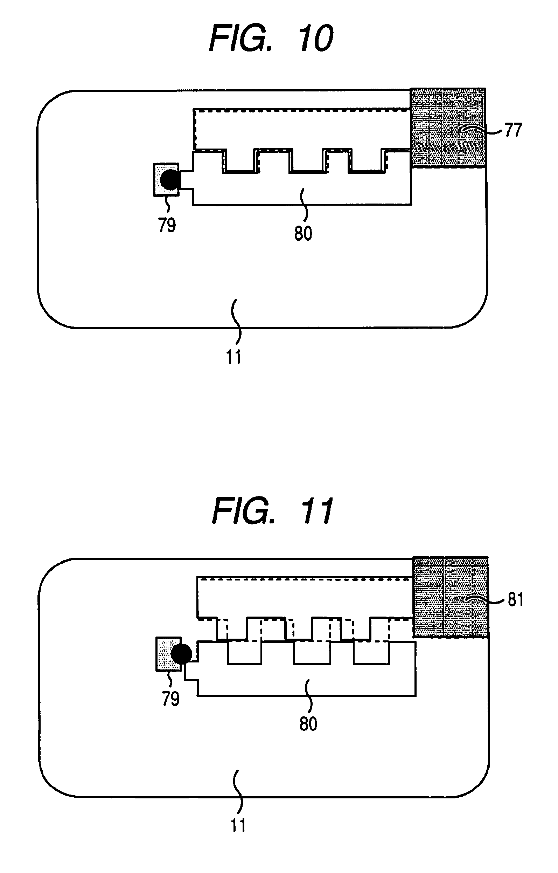

That is, as shown in Fig. 10, there is taken such a constitution that, when the correct mechanical key 77 is mounted to the portable electronic key 11, the mechanism 80 pushes the contact point of the microswitch 79. Accordingly, in the case like this, the microswitch 79 becomes the ON-state. By the fact that the mode switchover detection section 76 in Fig. 1 detects this contact point state, the operation mode of the portable electronic key 11 is set to the start permission mode.

In contrast to this, as shown in Fig. 11, in a case where other mechanical key 81 and the like are mounted to the portable electronic key 11, there is taken such a constitution that the mechanism 80 does not push the contact point of the microswitch 79. Accordingly, in the case like this, the microswitch 79 becomes the OFF-state. By the fact that the mode switchover detection section 76 in Fig. 1 detects this contact point state, the operation mode of the portable electronic key 11 is set to the start inhibition mode.

Other than that, e.g., in a case where the portable electronic key 11 is made a constitution in which the mechanical key 77 like Fig. 4 or Fig. 5 is not attached, although not shown in the drawing, it is possible to adopt an exclusive key holder or the like as the tally. That is, by inserting and withdrawing the exclusive key holder or the like into and from the portable electronic key 11, the parent (the user who is the driver) can perform the mode switchover operation.

Further. e.g., a complicated operation utilizing an unlocking/locking button 78 shown in Fig. 4 or Fig. 5, and the like can be adopted as the mode switchover operation. Concretely, e.g., the mode switchover detection section 76 previously stores a pattern operation pressing down the unlocking/locking button 78 and the like by plural times, and, when the unlocking/locking button 78 and the like were pressed down, judges whether or not that pressing-down operation coincides with the pattern operation and, only when judged that it coincided, can detect that the mode switchover operation was performed. Further, e.g., an exclusive knob is turned in a surface of the portable electronic key 11, and this knob is revolved by a driver not shown in the drawing, and the like. Only in a case where the knob was turned, the mode switchover detection section 76 can detect that the mode switchover operation was performed.

Incidentally, if the mode switchover operation itself is an operation which is difficult to falsely operate even if the portable electronic key 11 is contained in a pocket, it is suitable. For example, there is made such that the above-mentioned exclusive knob is provided in an inside (e.g., a place in which a lid for exchanging a battery is opened) of the portable electronic key 11, or it is rotated only by an exclusive driver.

Next, by referring to a flowchart in Fig. 12, there is explained about one example of a start permission processing in the ECU side among processings that the ECU 12 in Fig. 1 implements.

In a step S1, the ECU12 judges whether or not the start operation preparation signal was inputted.

Incidentally, as mentioned above, there is also a case where the start operation preparation signal includes also the signal that the ECU 12 itself formed and, in the case like this, it is made that the ECU 12 judges also when such a signal was formed that it is YES by the processing in the step S1.

During an interval till the start operation preparation signal is inputted (or, depending on a case, during an interval till it is formed by itself), it is judged to be NO by the processing in the step S1, and the judgment processing in the step S1 is implemented again.

And, if the start operation preparation signal is inputted (or, depending on a case, if it is formed by itself), it is judged to be YES by the processing in the step S1, and the processing proceeds to a step S2.

In the step S2, the ECU 12 transmits the "request" for performing the certification of the portable electronic key 11, by the LF.

In a step S3, the ECU 12 judges whether or not the UHF as the "answer" became transmitted from the portable electronic key 11.

In a case where the "answer" does not become transmitted from the portable electronic key 11, it is judged to be NO in the processing in the step S3, and the start permission processing in the ECU side becomes an end. In this case, as a result, the start of the vehicle is inhibited.

In contrast to this, in a case where the "answer" became transmitted from the portable electronic key 11, it is judged to be YES by the processing in the step S3, and the processing proceeds to a step S4. In the step S4, the ECU 12 judges whether or not the "start inhibition information" is included in the "answer".

In a case where the "start inhibition information" is included in the "answer", it is judged to be YES by the processing in the step S4, and the start permission processing in the ECU side becomes the end. That is, in this case, the fact that the operation mode of the portable electronic key 11 is the start inhibition mode is recognized by the ECU 12, and an output of the start permission signal is inhibited. By this, even in a case where even if the stepping-on operation of the accelerator, and the like were performed, the start of the vehicle is inhibited.

In contrast to this, in a case where the "start inhibition information" is not included in the "answer", it is judged to be NO by the processing in the step S4, and the processing proceeds to a step S5. In this case, the ECU 12 recognizes that the operation mode of the portable electronic key 11 is the start permission mode and, in the step S5, the ECU 12 outputs the start permission signal. By this, the start permission processing in the ECU side ends, and the vehicle starts by the fact that the stepping-on operation of the accelerator, and the like are made.

Next, about processings in a portable electronic key side in regard to the start permission processing like this in the ECU side, there is explained by referring to a flowchart in Fig. 13.

In a step 521, the portable electronic key 11 judges whether or not the "request" became transmitted by the LF from the ECU 12.

During an interval till the "request" becomes transmitted by the LF from the ECU 12, it is judged to be NO by the processing in the step S21, and a judgment processing in the step 21 is implemented again.

And, if the "request" becomes transmitted by the LF from the ECU 12 (the step S2 in Fig. 12), that "request" is received and it is judged to be YES by the processing in the step S21, and the processing proceeds to a step S22.

In the step S22, the portable electronic key 11 judges whether or not its own operation mode is the start inhibition mode.

In a case where it is the start inhibition mode, it is judged to be YES by the processing in the step S22, and the processing proceeds to a step S23 . In the step S23, the portable electronic key 11 forms the "answer" including the "start inhibition information" and, in a step S25, transmits that "answer" to the ECU 12 by the UHF. By this, the start permission processing in the portable electronic key side becomes an end. In this case, in the ECU 12 side, as mentioned above, the start permission signal is not outputted (the step S4 YES in Fig. 12) and, even in a case where the stepping-on operation of the accelerator, and the like were made, the start of the vehicle is inhibited.

In contrast to this, in a case where it is the start permission mode, it is judged to be NO by the processing in the step S22, and the processing proceeds to a step S24. In the step S24, the portable electronic key 11 forms the "answer" not including the "start inhibition information" and, in the step S25, transmits that "answer" to the ECU 12 by the UHF. By this, the start permission processing in the portable electronic key side becomes the end. In this case, in the ECU 12 side, as mentioned above, the start permission signal is outputted (the step S4 NO, S5 in Fig. 12), and the start of the vehicle is permitted. That is, by the fact that the stepping-on operation of the accelerator, and the like are made, the vehicle starts.

By the way, the above-mentioned series of processings (or the processing of one portion among them), e.g., the processing complying with at least one part between the above-mentioned flowcharts in Fig. 12 and Fig. 13, can be implemented by a hardware, or may be implemented by a software.

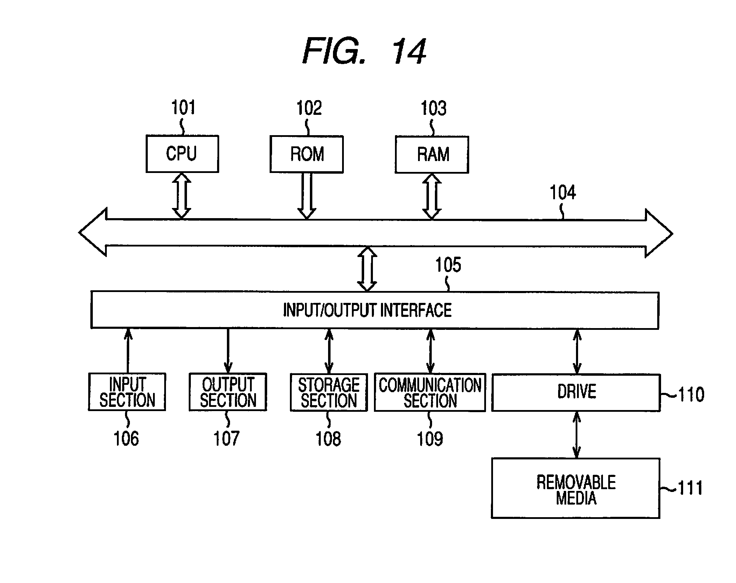

In a case where the series of processings (or the processing of one portion among them) are (or is) implemented by the software, the ECU 12 or its one portion, or the portable electronic key 11 or its one portion can be constituted, e.g., by such a computer as shown in Fig. 14.

In Fig. 14, a CPU (Central Processing Unit) 101 implements various processings in compliance with a program stored in a ROM (Read Only Memory) 102, or a program loaded from a storage section 108 to a RAM (Random Access Memory) 103. Further, in the RAM 103, there are suitably stored also data necessary when the CPU 101 implements the various processing, and the like.

The CPU 101, the ROM 102 and the RAM 103 are mutually connected through a bus 104. Further, an input/output interface 105 is also connected to this bus 104.

To the input/output interface 105, there are connected an input section 106 comprising a keyboard, a mouse and the like, an output section 107 comprising a display and the like, the storage section 108 comprising a hard disk and the like, and a communication section 109 comprising a modem, a terminal adapter and the like. The communication section 109 performs a communication processing with other device through a network including an internet. Additionally further, the communication section 109 performs also a transmission/reception processing between it and the portable electronic key 11 through an antenna not shown in the drawing. That is, the communication section 109 in the ECU 12 side transmits the above-mentioned "request" to the portable electronic key 11, or further receives the "answer" from the portable electronic key 11. Further, the communication section 109 in the portable electronic key 11 side receives the above-mentioned "request" from the portable electronic key 11, or further transmits the "answer" to the ECU 12.

Further, to the input/output interface 105, in compliance with a necessity there is connected a drive 110, and there is suitably connected a removable media 111 comprising a magnetic disk, an optical disk, a photomagnetic disk or a semiconductor memory etc., and computer programs read from them are installed to the storage section 108 in compliance with a necessity.

In a case where the series of processings are implemented by the software, a program constituting that software is installed from a network or a recording medium to a computer which is incorporated in an exclusive hardware, or, e.g., a general purpose personal computer capable of implementing various functions by installing various programs, and the like.

As shown in Fig. 14, the recording medium including the program like this is not only constituted by the magnetic disk (including a floppy disk), the optical disk (including a CD-ROM (Compact Disk-Read Only Memory) and a DVD (Digital Versatile Disk)), the photomagnetic disk (including an MD (Mini-Disk)) or the removable media (a package media) 111 comprising a semiconductor memory and the like, in which the program is recorded and which is distributed in order to provide the program to the user separately from a device main body, but also constituted by the ROM 102 in which the program is recorded, a hard disk included in the storage section 108, and the like, which are provided to the user under a state previously incorporated in the device main body.

Incidentally, in the present specification, a step of describing the program recorded in the recording medium is one including, of course, a processing performed in a time series along its order, and also a processing implemented in parallel or individually even if not always processed in the time series.

Further, not only the above-mentioned system mounted to the vehicle, a system to which the present invention is applied suffices if it is a system comprising the fixed radio communication device mounted to a material body of a motion object, and the portable radio communication device carried by the user performing the operation of a motion of that material body. Incidentally, here, the system is one denoting the whole device constituted by plural processing devices or processing sections.

For example, in the above-mentioned example, although the ECU 12, which is one example of the fixed radio communication device, is mounted to the vehicle (four-wheeled vehicle or two-wheeled vehicle) driven by the user carrying the electronic key 11 which is one example of the radio communication device, the fixed radio communication device can be mounted, other than that, to a conveyance such as small airplane for instance, a machine, an equipment, a building, or a facility and the like.

## Claims

1. A control system **characterized by** comprising a fixed radio communication device mounted to a vehicle and controlling an operation of the vehicle, and a portable radio communication device capable of being carried, wherein:
the portable radio communication device includes:
a mode setting means capable of setting a start permission mode permitting a start of the vehicle and a start inhibition mode inhibiting the start of the vehicle,
an answer formation means forming an answer capable of specifying an operation mode set by the mode setting means, and
an answer transmission means transmitting the answer, and
the fixed radio communication device includes:
a reception means receiving the answer, and
a start permission means which deciphers the answer and, in a case where a deciphered result is the start permission mode, permits the start of the vehicle.

2. A control method of a control system including a fixed radio communication device mounted to a vehicle and controlling an operation of the vehicle, and a portable radio communication device capable of being carried, **characterized by** comprising controlling such that:
the portable radio communication device
sets one between a start permission mode permitting a start of the vehicle and a start inhibition mode inhibiting the start of the vehicle, and
forms and transmits an answer capable of specifying a set operation mode, and
the fixed radio communication device
receives the answer, and
deciphers the answer and, in a case where a deciphered result is the start permission mode, permits the start of the vehicle.

3. A fixed radio communication device in a control system including the fixed radio communication device mounted to a vehicle and controlling an operation of the vehicle, and a portable radio communication device capable of being carried, **characterized by** comprising:
a reception means in which, by the portable radio communication device, there is set one between a start permission mode permitting a start of the vehicle and a start inhibition mode inhibiting the start of the vehicle, and which, in a case where an answer capable of specifying a set operation mode was formed and became transmitted, receives the answer, and
a start permission means which deciphers the answer received by the reception means and, in a case where a deciphered result is the start permission mode, permits the start of the vehicle.

4. A fixed radio communication method of a fixed radio communication device in a control system including the fixed radio communication device mounted to a vehicle and controlling an operation of the vehicle, and a portable radio communication device capable of being carried, **characterized by** comprising the steps of:
setting one of a start permission mode permitting a start of the vehicle and a start inhibition mode inhibiting the start of the vehicle by the portable radio communication device, and in a case where an answer capable of specifying the set operation mode is formed and transmitted, receiving the answer, and
deciphering the received answer and, in a case where a deciphered result is the start permission mode, permitting the start of the vehicle.

5. A portable radio communication device in a control system including a fixed radio communication device mounted to a vehicle and controlling an operation of the vehicle, and the portable radio communication device capable of being carried, **characterized by** comprising:
a mode setting means capable of setting a start permission mode permitting a start of the vehicle and a start inhibition mode inhibiting the start of the vehicle,
an answer formation means forming an answer capable of specifying an operation mode set by the mode setting means, and
an answer transmission means transmitting the answer.

6. A portable radio communication method of a portable radio communication device in a control system including a fixed radio communication device mounted to a vehicle and controlling an operation of the vehicle, and the portable radio communication device capable of being carried, **characterized by** comprising the steps of:
setting one of a start permission mode permitting a start of the vehicle and a start inhibition mode inhibiting the start of the vehicle, and
forming and transmitting an answer capable of specifying a set operation mode.
